Europäisches Patentamt

European Patent Office

Office européen des brevets

(11) Publication number: **0 091 324**
**B1**

# EUROPEAN PATENT SPECIFICATION

(45) Date of publication of patent specification: **21.09.88**

(51) Int. Cl.⁴: **B 62 M 9/12**

(21) Application number: **83301969.8**

(22) Date of filing: **07.04.83**

(54) Control device for cycle gear change.

(30) Priority: **07.04.82 JP 57909/82**
**09.04.82 JP 52316/82 u**

(43) Date of publication of application:
**12.10.83 Bulletin 83/41**

(45) Publication of the grant of the patent:
**21.09.88 Bulletin 88/38**

(84) Designated Contracting States:
**BE DE FR GB IT**

(56) References cited:
**EP-A-0 020 092**
**EP-A-0 036 317**
**FR-A-2 280 542**
**FR-A-2 337 657**
**FR-A-2 385 581**

(73) Proprietor: **SHIMANO INDUSTRIAL COMPANY LIMITED**
**77, 3-cho Oimatsu-cho Sakai-shi**
**Osaka (JP)**

(72) Inventor: **Nagano, Masashi**
**74-19, Midorigaoka**
**Izumi-shi Osaka (JP)**

(74) Representative: **Szczuka, Jan Tymoteusz et al**
**Cruikshank & Fairweather 19 Royal Exchange Square**
**Glasgow G1 3AE Scotland (GB)**

Courier Press, Leamington Spa, England.

## Description

This invention relates to a gear change control device for a cycle, and more particularly to a gear change control device having a gear change control lever operable to actuate a cycle derailleur so that a drive chain carried by a chain guide of the derailleur is shifted from one to another of the multi-speed sprockets of the cycle changing of the cycle speed.

In general the derailleur comprises a four member linkage mechanism comprising a base member, two linkage members and a movable member carrying the chain guide, formed and arranged so that the control lever is operable to pull on a control wire and thereby move the movable member relative to the base member, and shift the chain guide axially of the multi-speed sprocket assembly, thereby switching the driving chain to a desired sprocket for changing the cycle speed.

Conventional gear change control devices apply a rotational (e.g. frictional) resistance to the control lever to resist movement thereof under the influence of a return spring thereby to retain the chain guide at a predetermined position corresponding to a desired cycle speed.

With such an arrangement, movement of the displaced chain cannot be sensed by the cyclist. Accordingly there has been proposed a positioning device which is provided at one member of the derailleur linkage mechanism with a positioning plate including a plurality of recesses corresponding to the number of speed change stages and carrying retainer selectively engageable with each of a plurality of recesses at another member movable relative to said one member so that during speed changing the retainer engages one recess to determine the speed change stage and the cyclist can read out the movement of chain via the clicking taking place as the retainer engages and disengages successive recesses, and which is transmitted through the hearing and or touch senses of the rider.

Where the control wire is operated to change the cycle speed, especially during switching of the chain from a larger diameter sprocket to a smaller diameter one, the cyclist, an unskilled one especially, may terminate the speed changing operation before or beyond the optimum position corresponding to the desired cycle speed even when such a positioning mechanism has been provided. Hence, the retainer of the positioning mechanism may come to a halt near the transition from one recess to another, resulting in the chain contacting the sprocket in the course of switching or colliding with one side of the sprocket thereby resulting in the generation of noise, or unnecessary wear of the sprocket and chain.

There has also been previously disclosed in our earlier patent publication EP—A—0020092, a gear change device for a cycle comprising a control lever and a derailleur inter-connected in use through a control wire, said control lever having a lever body engageable, in use, with one end of the control wire and freely rotatable, a rotary member rotatable under a predetermined rotational resistance and a first drive connection for acting between said control level and rotary member so that said lever body moves in association with said rotary member, said derailleur comprising a four member linkage made up of a base member, two link members, and a movable member mounting a chain guide and having a positioning mechanism formed and arranged to position the chain guide so that, in use, said lever is operated to pull on said control wire to displace the movable member relative to said base member and a return spring moves backward said movable member thereby to change the cycle speed, said derailleur also including a control member which operates independently of first and second members movable relative to each other and mounting said positioning mechanism for action therebetween and has a support means for supporting one of said control wire and an outer sheath guiding said wire, and a second drive connection provided between said control member and said second member which second member is movable relative to said control member for displacement of said movable member, said second drive connection being formed and arranged to allow said second member to be movable within a given range relative to said control member and said return spring being formed and arranged to act on said movable member, via said control member and second member, so that the influence of said return spring on said second member is inactivated and said second member is movable, within said range at different positions of the positioning mechanism set by displacement of the control member by the control lever through the control wire in use of the device.

In this latter case there is used a particular form of positioning mechanism involving the rapid displacement of the positioning mechanism by spring forces, to a correct gear change position and directed to a different technical problem, viz. that of providing rapid accurate gear changing even when the control lever is moved slowly and inaccurately.

The present invention provides a gear change device for a cycle comprising a control lever and a derailleur inter-connected in use through a control wire, said control lever having a lever body engageable, in use, with one end of the control wire and freely rotatable, a rotary member rotatable under a predetermined rotational resistance and a first drive connection for acting between said control lever and rotary member so that said lever body moves in association with said rotary member, said derailleur comprising a four member linkage made up of a base member, two link members, and a movable member mounting a chain guide and having a positioning mechanism formed and arranged to position the chain guide so that, in use, said lever is operated to pull on said control wire to displace the movable member relative to said base member and a return spring moves backward said movable member thereby to change the cycle speed, said derailleur also including a control member which operates independently of first and second members movable relative to each other and mounting said positioning mechanism for action therebetween and has a support means for supporting one of said control wire and an outer sheath guiding said wire, and a second drive connection provided between said control member and said member which second member is movable relative to said control member for displacement of said movable member, said second drive connection being formed and arranged to allow said second member to be movable within a given range relative to said control member and said return spring being formed and arranged to act on said movable member, via said control member and second member, so that the influence of said return spring on said second member is inactivated and said second member is movable, within said range at different positions of the positioning mechanism set by displacement of the control member by the control lever through the control wire in use of the device, characterized in that said first drive connection is a lost motion drive connection for allowing said lever body to move in association with said rotary member through a predetermined interval of free movement, and in that said second drive connection is a lost motion drive connection to allow said second member to be freely movable relative to the control member so as to allow, in turn, said movable member to be freely displaceable under the influence of the cycle drive chain into a gear sprocket engaging position when said control member is set to a position corresponding to an intermediate position of the positioning mechanism between adjacent gear change positions thereof.

Accordingly in a case where the control lever is overshifted the return spring is used to forcibly move the movable member back to its correct position whilst in a case where the lever is undershifted with respect the displacement necessary to bring the chain into contact with the sprocket to be switched, the tension of the drive chain is used forcibly to move on the freely displaceable movable member, thereby also ensuring a correct switching of chain to the desired sprocket.

Thus with a gear-change control of the invention the cyclist is able to monitor the gear-change stage reached via his feel of the click-stop resistance of the positioning mechanism and can also switch the chain accurately to the desired sprocket, in particular when switching from a smaller diameter sprocket to a larger diameter one, even when the control lever is operated inaccurately corresponding to overshifting or undershifting of the drive chain. As a result the generation of noise and unnecessary wear resulting from improper contacting of the drive chain with the sprockets are substantially reduced.

When the gear change control lever is overshifted the cyclist can simply release the lever to allow it automatically to restore the chain guide to the optimum position for the desired sprocket without the need for corrective movement of the control lever. As a result, improper contacting of the drive chain with the sprocket is substantially eliminated.

When the gear change control lever is slightly undershifted the tension in the drive chain can automatically move the movable member, thereby moving the chain guide on to the optimum position corresponding to the desired sprocket and again avoiding improper contacting with the sprockets.

Further preferred features and advantages of the invention will appear from the following detailed description given by way of example of some preferred embodiments illustrated with reference to the accompanying drawings in which:

Fig. 1 is a partially cutaway front elevation of an embodiment of a first gear change control device of the invention;

Fig. 2 is a partially cutaway side elevation illustrating the inter-relation between the lever body of a gear change control lever and an associated frictional rotary member;

Fig. 3 is a front view of an embodiment of a typical derailleur used with the gear change control device of Fig. 1;

Fig. 4 is a bottom view of the derailleur of Fig. 3;

Fig. 5 is a partial front elevation of the derailleur of Fig. 3 shown on an enlarged scale;

Fig. 6 is a corresponding bottom view of the derailleur;

Fig. 7 is a view corresponding to Fig. 4 illustrating operation of the control lever;

Fig. 8 is a detail view illustrating the operational relationship between the recesses and a retainer of the positioning mechanism;

Figs. 9 to 11 show second and third embodiments:

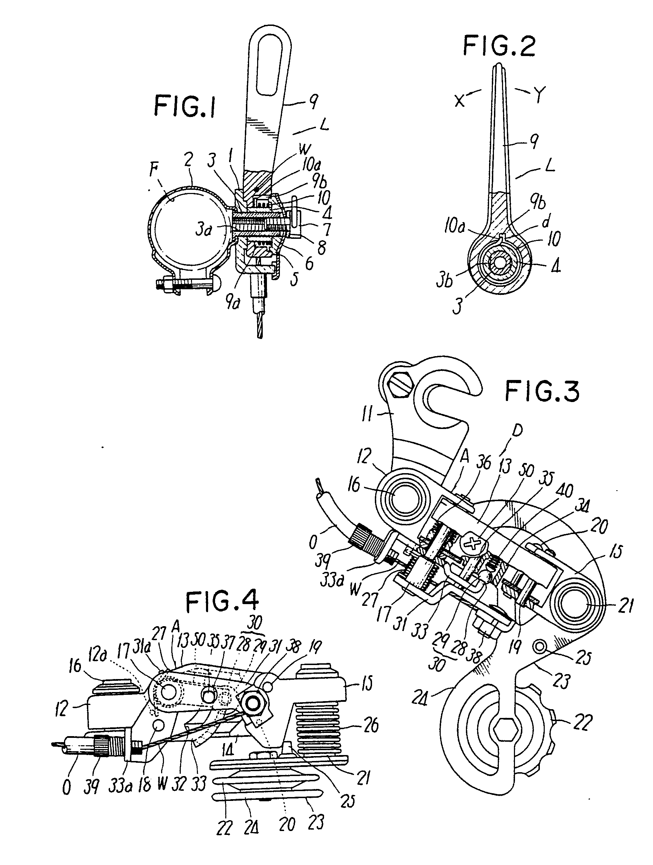

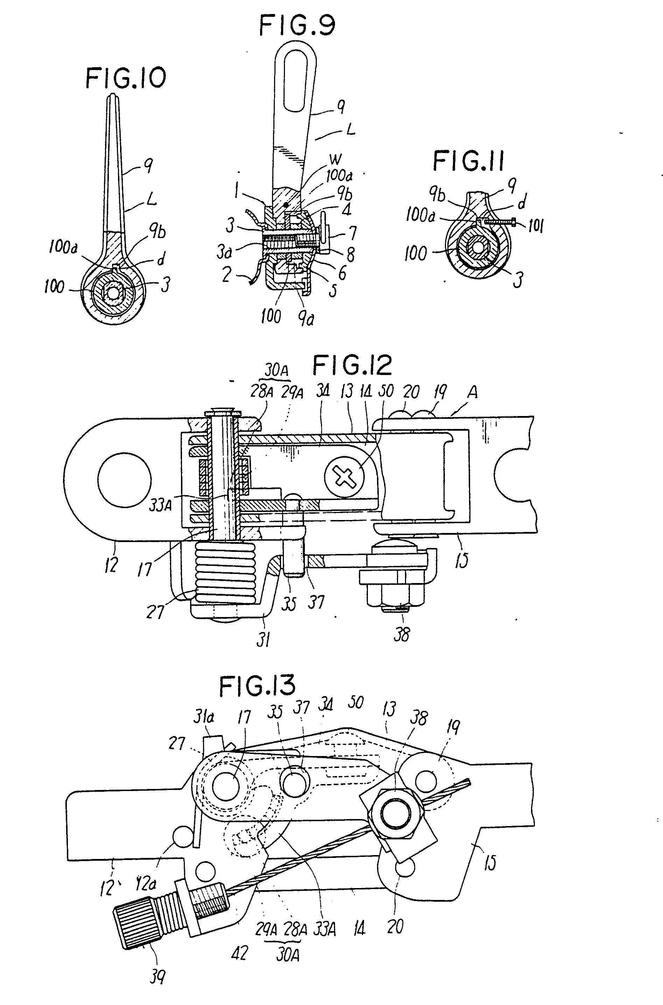

Fig. 9 is a partially sectioned front elevation corresponding to Fig. 1;

Fig. 10 is a partially sectioned side elevation corresponding to Fig. 2;

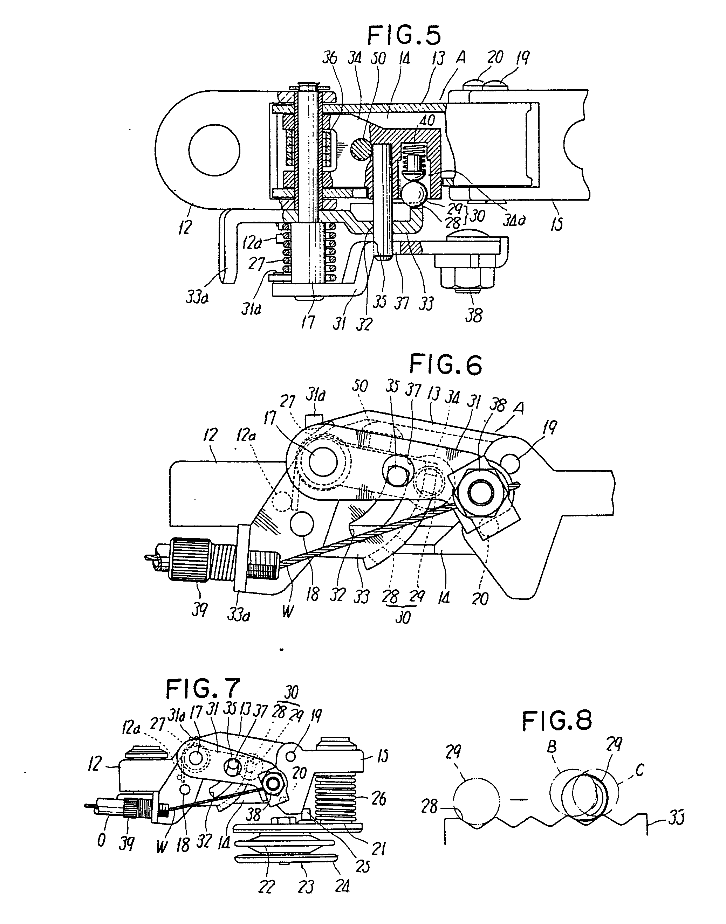

Fig. 11 is a partial sectional view of a third embodiment corresponding to Fig. 8;

Figs. 12 to 21 are views of further embodiments of the derailleur;

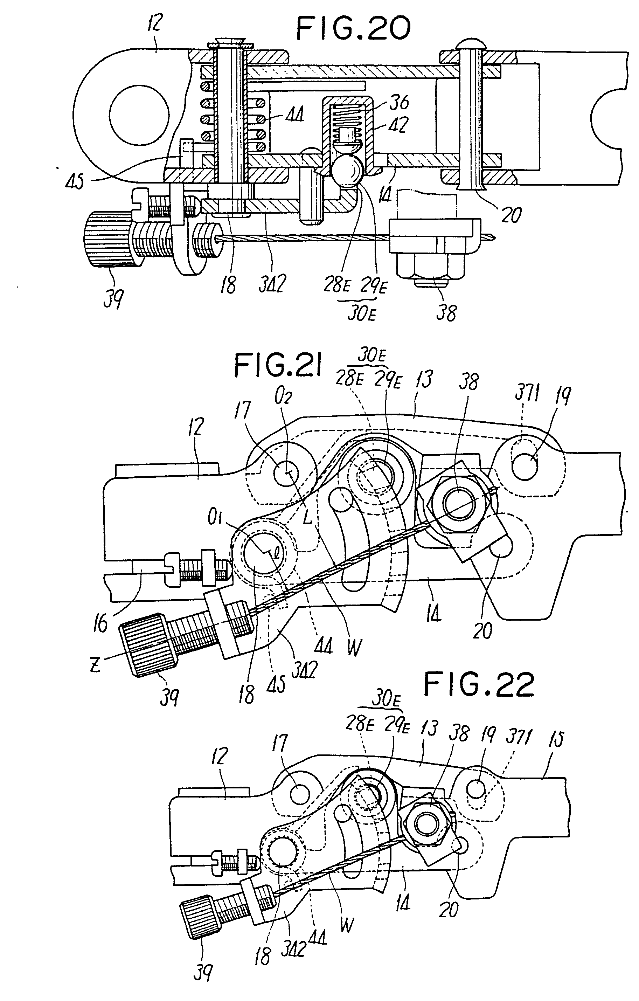

Fig. 22 is a view illustrating operation of a linkage member in relation to the positioning mechanism, corresponding to Fig. 21;

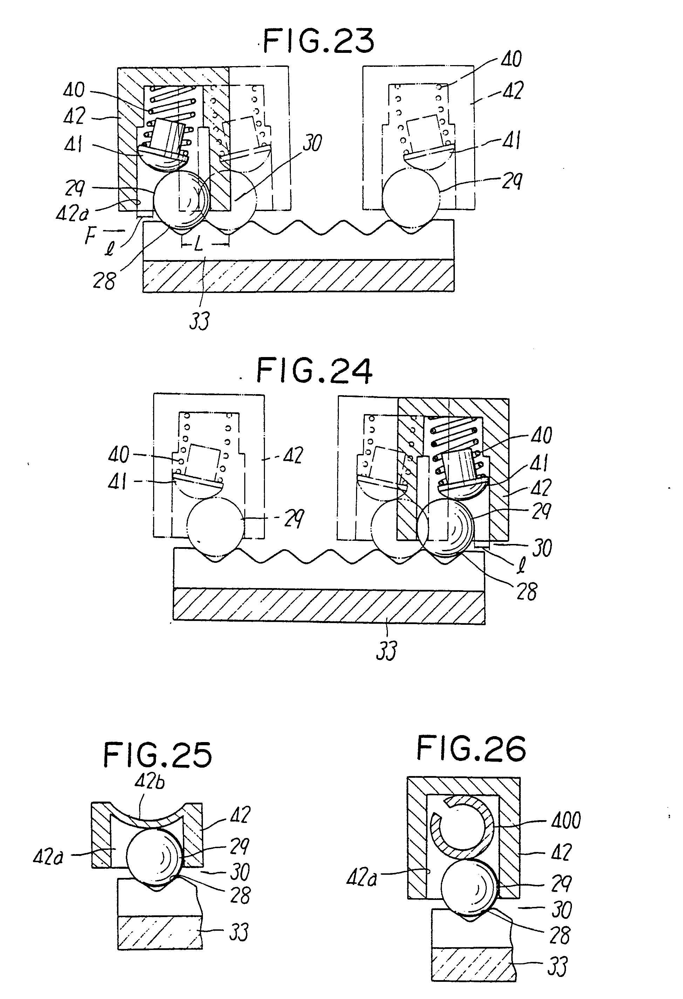

Fig. 23 is an enlarged scale detail view of a positioning mechanism;

Fig. 24 is a corresponding view illustrating operation of the positioning mechanism of Fig. 23; and

Figs. 25 and 26 are similar detail views of further embodiments of the positioning mechanism.

A gear change device of the invention generally comprises a gear change control lever L and a derailleur D. There will now be described one embodiment of the control lever L.

Figs. 1 and 2 show a fixing member 1 mounted on a cycle frame $F$ or alternatively on a cycle handle bar with the aid of a clamping bank 2. The fixing member 1 supports a tubular shaft 3 having an internally screw-threaded bore $3a$ and on its outside at opposite sides flats $3b$.

A frictional rotary member is rotatably supported on the tubular shaft 3 with a predetermined resistance to rotation thereon, the rotary member 4 being cylindrical as shown in Figs. 1 and 2. The rotary member 4 is biased by a biasing plate 5 non-rotatably mounted on the tubular shaft 3 around the flat portions $3b$ thereof and subjecting it to resistance against rotation. The biasing plate 5 contacts at its axially outer surface a cover plate 6 non-rotatably secured on the fixing member 1 and an adjusting screw 7 screw-threadedly engaging the screw-threaded bore $3a$ of tubular shaft 3 presses on the biasing plate 5 via a washer 8 and the cover plate 6 to press the former against the rotary member 4. Screwing in or out of the adjustment screw 7 adjusts the rotational resistance to a level sufficient to overcome the force exerted by the return spring of the derailleur which will be further described hereinbelow.

The rotary member 4 supports on its outer periphery a lever body 9 having a boss and a control portion and near the boss, control wire engagement means for holding one end of a control wire $W$, the boss of lever body 9 having at its center a bore dimensioned to receive therethrough the rotary member 4 and an annular chamber $9a$ in continuation of the bore, the chamber $9a$ having in one side a retaining groove $9b$ extending radially outwardly of the boss.

The lever body 9 is also connected to the rotary member 4 through a first association means which employs a clutch spring 10 as shown in Figs. 1 and 2. The clutch spring 10 is wound around the rotary member 4 being retained at one end in the retaining groove $9b$ of the lever body 9.

When the lever body 9 is moved against the force of the return spring of the derailleur to pull the control wire $W$ in the direction of the arrow $X$ in Fig. 2, the clutch spring 10 expands radially away from the rotary member 4 and when the lever body 9 is released the clutch spring 10 is again tightened by the spring force of the return spring transmitted via the control wire $W$. Thus when the clutch spring 10 is tightened, the lever body 9 is held unitary with the rotary member 4 and subjected to the rotational resistance against rotational movement thereby being kept stationary in the controlled position. Conversely when the lever body 9 is turned in the same direction as the return spring (in the direction of arrow $Y$ in Fig. 2), the clutch spring 10 increases its tightening force, so that the lever body 9 turns unitarily together with the rotary member 4 up to the desired gear change stage, and is then released to keep the rotary member 4 stationary at the desired position.

The first association mechanism allows the lever body 9 to move freely within a predetermined range. In more detail, referring to Figs. 1 and 2, the retaining groove $9b$ has a larger circumferential extent (with respect to the chamber $9a$) than the cranked end $10a$ of the clutch spring 10 retained in said groove $9b$ thereby forming a gap between one wall of groove $9b$ and the cranked end $10a$, thus allowing the lever body 9 to turn freely through a distance corresponding to the width of said gap.

Accordingly, when the lever body 9 is released after pulling of the control wire $W$, it is returnable by a fixed amount relative to the amount of the pulling of the control wire $W$.

The amount of return movement is made to be approximately equal to the movement of a drive chain which has engaged the sprocket with one side so as to make contact with an adjacent sprocket and thereafter returns the central plane, with respect to its thickness of the engaged sprocket.

There will now be described one embodiment of a derailleur of the invention with reference to Figs. 3 to 8.

In the drawings there is shown a rear derailleur which comprises a four member linkage mechanism comprising a base member 12 pivotally mounted on a fixing member 11, two parallel link members 13 and 14, and a movable member 15, as shown in Figs. 3 and 4. The fixing member 11 is secured at the fork end of the cycle, the base member 12 being supported pivotally on the fixing member 11 via a horizontal pivot 16.

The base member 12 is provided at one side with a pair of mounting noses, on which the linkage members 13 and 14 are pivotally mounted via a pair of pins 17 and 18, the movable member 15 being pivotally connected to free ends of the linkage members 13 and 14 via a pair of pivot pins 19 and 20.

The movable member 15 is shaped similarly to the base member 12 and is provided at one side with a pair of opposed mounting noses and pivotally connected to the link members 13 and 14, and at its other side with a chain guide 23 which carries a guide pulley (not shown) and a tension pulley 22 and is mounted on the movable member 15 for rotation only within a limited range on a horizontal pivot 21 parallel to the horizontal pivot 16, so that the link members 13 and 14 swing to move the movable member 15 transversely with respect to the base member 12 in the direction from the high speed stage shown in Fig. 4 to the low speed stage.

The chain guide 23 comprises a guide pulley, tension pulley 22, and a change-over frame 24, and is supported rotatably on the movable member 15 via the pivot 21, being limited in its range of rotational movement by a stopper 25, and biased clockwise (as viewed in Fig. 3) by a tension spring 26 coiled around the pivot 21, the tension spring 26 serving to apply tension to the drive chain carried around the guide pulley and tension pulley 22.

The derailleur linkage mechanism $A$ is provided with a return spring 27 to bias the movable member 15, and in turn the chain guide 23 towards the smaller diameter sprocket, and also with a positioning mechanism 30 including a plurality of recesses 28 corresponding in number to the number of speed change stages of the system and a retainer 29 selectively engageable with any one of said recesses.

There will now be described the positioning mechanism 30.

In Figs. 3 to 8, the base member 12 of the derailleur linkage mechanism A is provided with a positioning plate 33, the linkage member 13 is provided with an energy storage member 34 which is operable even when the resistance against the speed changing exceeds the predetermined value. The positioning mechanism 30 is disposed between the positioning plate 33 and the energy storage member 34. A control arm 31 for operating the energy storage member 34 is provided and is associated with the positioning mechanisms 30 through a second association mechanism movable relative to the energy storage member 34 within a predetermined range.

In more detail, the control arm 31 is supported on the pin 17 for pivoting independently of the derailleur linkage mechanism A and is fixed at its free end by a securing means 38. The derailleur return spring 27 is interposed between the base member 12 and the control arm 31 and abuts at one end a stop 31a provided on the control arm 31 and at its other end against a stop 12a on the base member 12, biasing the control arm 31 counterclockwise (as viewed in Figs. 4 and 6). The positioning plate 33 is mounted on the base member 12 via the pivots 17 and 18 providing the recesses 28 and an arcuate part-circular guide slot 32. The energy storage member 34 is mounted pivotally on an intermediate portion of the pivot 17 supporting the control arm 31, and carries the retainer 29 constituting the positioning mechanism 30 and an engagement pin 35 which constitutes a second association mechanism with the control arm 31. An energy storage spring 36 for biasing the energy storage member 34 toward the linkage member 13 is interposed between the latter and the energy storage member 34, and the control arm 31 is provided with a control bore 37 which receives the engagement pin 35 to allow the control arm 31 to move only within a given range relative to the pin 35, so that the engagement pin 35 is inserted into the control bore 37 to from the second association mechanism, thereby allowing the positioning mechanism 30 to operate after movement of the control arm 31 within a given range.

In more detail, the control arm 31 is secured to an axially outward extension of the pivot 17 so as to be pivotable together therewith, and secures at its free end a terminal of the control wire W through the fixing 38, so that the wire W is pulled to deflect the return spring 27 thereby to swing the control arm 31. The bore 37 in the control arm is, as shown in Fig. 4, made larger in diameter than the engagement pin 35 to allow the control arm 31 to move relative to the engagement pin 35 only within a range corresponding to the free rotation range of the lever body 9. The control arm bore 37 could alternatively be elongate in a circular arc around the pin 17, or formed as a recessed cutout. In brief, the control arm bore 37 may simply be formed to allow the control arm 31 to move only within a given range relative to the engagement pin 35.

The positioning plate 33 is laid under the base member 12, secured at an intermediate portion to the base member 12 through the pivot pins 17 and 18, and directed at one end towards the movable member 15 and provided on an edge face at said one end with the recesses 28 as shown in Fig. 8. The other end of the positioning plate 33 is raised to provide at an upstanding end portion 33a a support 39 for the outer sheath O for the control wire W.

The energy storage member 34, even when the resistance against the speed changing during non-movement of the drive chain is larger than that during movement of the same—around the sprockets—swings together with the control arm 31 relative to the link mechanism A upon operation of the control wire W thereby preliminarily to switch the positioning mechanism A to a desired speed change stage, and then, when the larger resistance is released to start travelling of the chain, allows the movable member 15 to move toward the abovementioned preliminarily set speed change stage by means of restoring operation of the energy storage spring 36. Also, when the resistance against gear-changing is normal, the energy storage member 34 swings unitarily i.e. in unison with the linkage member 13.

Furthermore, a plurality of recesses 28 of the positioning mechanism 30 are disposed along the path of movement of the energy storage member 34 during gear changing and at predetermined intervals corresponding to movement of the energy storage member 34. The retainer 29 comprises a rolling member fitted into a recess 34a formed in the energy storage member 34 and is biased toward the recesses 28 by a spring 40 through a pusher 41.

In addition the drawing shows an adjusting screw 50 for adjusting the chain guide 23 in the set position relative to the base member 12.

There will now be described the operation of the speed control lever L and derailleur D.

When the movable member 15 is positioned at the high speed gear change stage as shown in Figs. 4 and 6, and the control lever L is operated to pull the control wire W, the lever body 9 at first freely rotates within the gap d in the slot 9b therein, the return spring 27 abutting against one end of the control arm 31 on the derailleur D deforms, and the control arm 31, as shown in Fig. 7, swings in the range of pivotal movement thereof set by the control arm bore 37, in other words, the range corresponding to the aforesaid range of free rotation of the lever body 9. It may be noted that the movable member 15 is stationary during the free rotation of lever body 9 and the swinging motion of control arm 31, but the return spring 27 is disconnected from the link member 13 by the aforesaid swinging motion of the control arm 31. As a result, the movable member 15 becomes freely movable toward the larger diameter sprocket. Also, the lever body 9, when released, returns under the influence of the return force of the return spring 27, in the reverse direction with respect to the direction of pulling of the control wire W.

The lever body 9 having rotated through its range of free rotation is then operated to pull or the control wire W, whereupon the clutch spring 10 deforms to separate from the rotary member 4 and the control arm bore 37 contacts at the end with the engagement pin 35 and thereafter the energy storage member 34 and linkage members 13 and 14, follow the swinging motion of the control arm 31, whereby the movable member 15 moves towards the larger diameter sprocket and the positioning mechanism 30 is actuated. Now, in a case where the operation of lever body 9 is stopped when the retainer 29 of the positioning mechanism 30 moves beyond the transition point between two adjacent recesses 28 but only half way into the next recess, in other words, in a case of undershifting, the chain guided by the chain guide 23 contacts the larger diameter sprocket, but does not mesh therewith. In this case, a conventional derailleur will leave the chain at the position beyond the border as shown by the phantom line in Fig. 8 so that the chain is held in contact with the sprocket but without properly engaging it, thereby generating noise. The above described device of the invention, however, keeps the movable member 15 free, so that, even when control lever operation is discontinued, a driving force acting on the chain allows the movable member 15 to move towards the larger diameter sprocket in the abovementioned range of pivotal movement of the control arm 31. Hence, the chain contacting the larger diameter sprocket can reliably mesh therewith, whereupon the retainer 29 also engages accurately with the recess corresponding to the desired sprocket and is maintained in the position set by the positioning mechanism 30. On the other hand, the chain may also contact the sprocket so as to be raised up thereby becoming partly engaged thereby according to the amount of pull exerted on the control wire W, whereupon if the amount of pull is insufficient, the inner link of the chain are brought into contact with the sprocket partly engaging the chain. If pulling of the control wire W is now discontinued in the above-described state, noise may be generated. Even in this case, though, the above described device allows the movable member 15 to move similarly within the abovementioned range of pivotal movement under the influence of the driving force applied to the chain, thereby making it possible to maintain the chain guide 23 at the desired speed change position set by the positioning mechanism 30.

In the case where the control wire W is pulled to move the retainer 29 beyond the root of the desired recess 28 toward the flank at a side of the next recess 28, i.e. is overshifted, then in a conventional derailleur, when movement of the control lever body 9 is discontinued, the retainer 29 stops halfway between the root of desired recess 28 and the transition to the next recess 28 thereby to hold the chain guided by the chain guide 23 in contact with the next adjacent larger diameter sprocket, thereby generating noise. The above described device of the invention, however, makes the control lever body 9 rotatable in the return direction within the range of movement defined by the gap d, whereby the return force of the return spring 27 moves the lever body 9 back. As a result, the movable member 15 is moved back by the return spring 27 toward the smaller diameter sprocket in the abovementioned range of return movement of the lever body 9, whereby the retainer 29 also engages accurately the desired recess 28 and the chain guide 23 is held in the speed change position stage set by the positioning mechanism 30.

Alternatively, the first association mechanism may, as shown in Figs. 9 and 10, provide a rotary member 4 split into two at an axially intermediate position and a disc 100 having an engagement projection 100a engageable with the engaging groove 9a and interposed between the split rotary member 4 thereby to apply the rotational resistance to the disc 100. Also the disc could be formed integrally with the rotary member 4.

Also, the amount of return rotation of the lever body 9 may, as shown in Fig. 11, be adjusted conveniently via screw control means e.g. a screw 101 extending through the lever body 9 into the gap d.

Further alternative forms of the above described derailleur are as shown in Figs. 12 to 22.

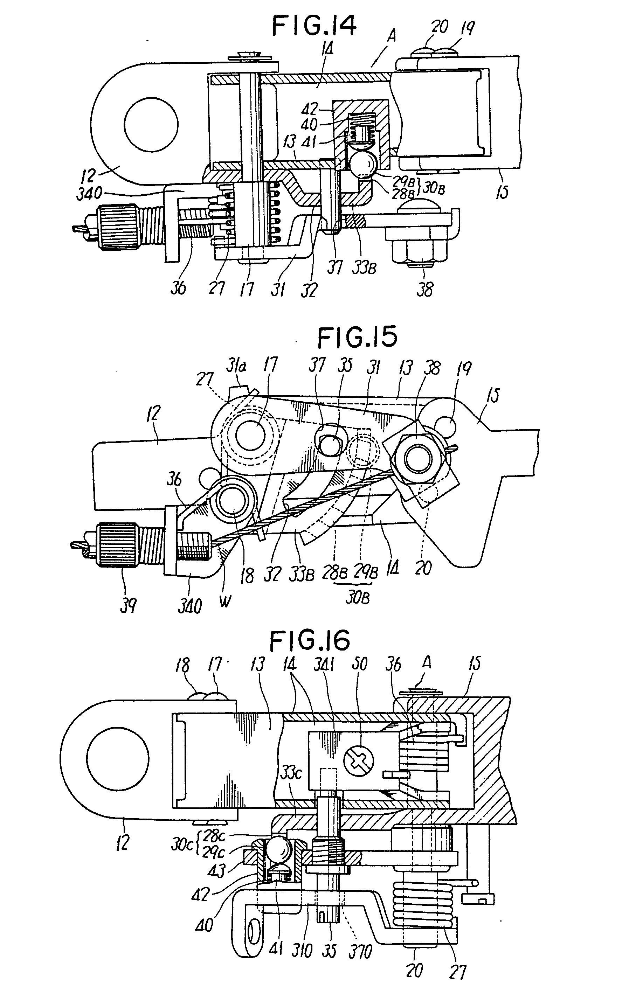

In the device of Figs. 12 and 13, a positioning mechanism 30A is provided between the base member 12 and the energy storage member 34 pivotally supported to the pin 17, where other components are the same as those in Figs. 3 and 4. In this case, a positioning plate 33A is provided at the energy storage member 34 and a cylindrical holder 42 holding a retainer 29A is provided at the base member 12.

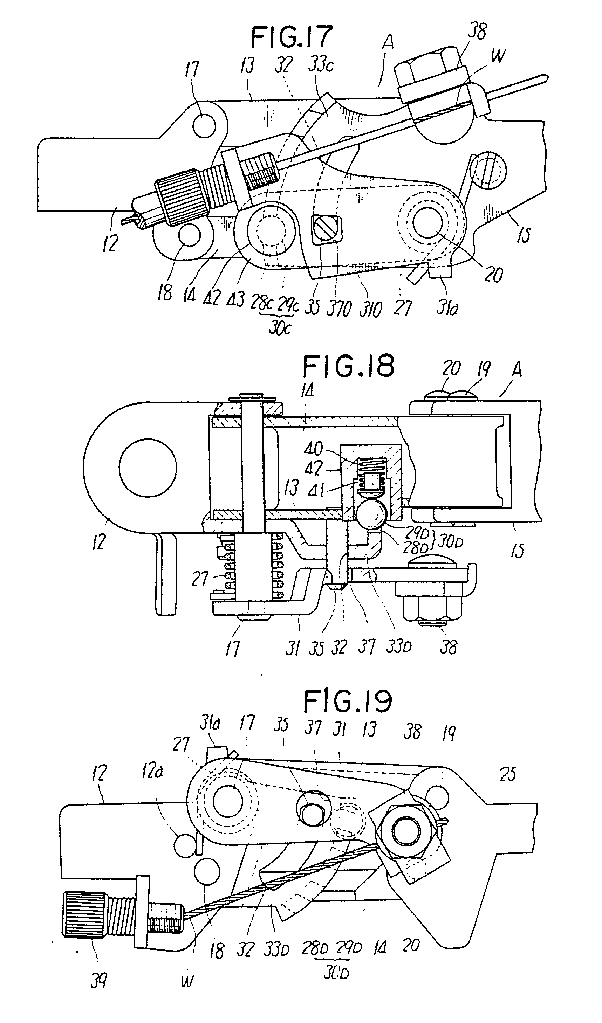

In Figs. 14 and 15, a positioning mechanism 30B is provided between the base member 12 and the linkage member 13 and an energy storage member 340 is pivoted to the pin 18 at the base member 12 and carries the support 39 for the outer sheath O. In this case, a positioning plate 33B having recesses 28B is provided at the base member 12, a cylindrical holder 42 holding a retainer 29B is provided at the linkage member 13, and a guide bore 32 for the engaging pin 35 is provided at the positioning plate 33B.

In Figs. 16 and 17, a control arm 310 is supported to the pin 20 at the movable member 15, the return spring 27 is inserted between the control arm 310 and the movable member 15, the control arm 310 supports the outer sheath O, and the pin 20 supports an energy conserving plate 341 and a holder plate 43. A positioning mechanism 30C is provided between the holder plate 43 and the movable member 15 so that the holder plate 43 and energy conserving plate 341 are associated with each other through the engaging pin 35, and a control bore 370 is provided at the control arm 310 so that the engaging pin 35 is inserted into the control bore 370, thereby constituting the second association mechanism. In this case, a positioning plate 33C having recesses 28C is integral with the movable member 15, the cylindrical holder 42 holding the retainer 29C is mounted on the holder plate 43, and the guide bore 32 for the engaging pin 35 is provided at the positioning plate 33C.

In Figs. 18 and 19, no energy conserving plate is used, a positioning mechanism 30D is provided between the base member 12 and the linkage member 13 as the same as Figs. 14 and 15, and the engaging pin 35 insertable into the control bore 37 at the control arm 31 is provided at the linkage member 13. In this case, a positioning plate 33D having recesses 28D is integral with the base member 12 and the cylindrical holder 42 holding a retainer 29D is mounted to the linkage member 13.

In a case of using no energy conserving member, the control arm 31 may alternatively be supported to the pin 20 at the movable member 15, the return spring 27 may be interposed between the control arm 31 and the movable member 15, the positioning mechanism 30 may be provided between the linkage member 14 and the movable member 15, and the outer sheath $O$ may be supported to the control wire 31 and the control wire $W$ to the movable member 15, or the positioning mechanism 30D may be provided between the linkage members 13 and 14 and other components may be constructed as the same as Figs. 18 and 19, the above construction being not shown.

In Figs. 20 and 21, the control arm 31 is omitted, one linkage member 13 or 14 fixedly supports the control wire $W$ through the fixture 38, a control bore 371 is provided at the end of linkage member 13 at a side of movable member 15, and the pin 19 is inserted through the control bore 371 so that the linkage member 13 is associated with the movable member 15 rotatably only in a given range to thereby constitute the second association mechanism, an energy conserving plate 342 is pivoted to the pin 18 at the base member 12, the outer sheath $O$ is supported to the energy conserving plate 342 through the support 39, a positioning mechanism 30E is provided between the energy conserving plate 342 and the other linkage member 14 or 13, and an energy conserving and return spring 44 is wound onto the pin 18, the spring 44 engaging at one end with the inner surface at an intermediate portion of linkage member 13 and at the other end with a stopper 45 provided at the energy conserving plate 342. In this case, when the wire $W$ is pulled, the linkage member 13 only swings within the range of swinging motion set by the control bore 371 as shown in Fig. 22. When the control wire $W$ is further pulled, the end of control bore 371 abuts against the pin 19, and thereafter the other linkage member 14 follows the swinging motion of one linkage member 13, thereby actuating a positioning mechanism 30E.

In addition, in the above case shown in Figs. 20 and 21, length of the normal from the center $O_1$ of swinging motion of energy conserving plate 342 to the line of action $Z$ is represented by $l$, and length of the normal from the pivot point $O_2$ of linkage member 13 to the line $Z$ is by $L$, the lengths $l$ and $L$ are set to be $l<L$. Accordingly, when the moment of the energy conserving and return spring 44 is expressed by $M$, a force $F_1$ necessary to swing the energy conserving plate 342 against the spring 44 is given by $F_1=M/l$. A force $F_2$ necessary to move the linkage member 13, in turn the movable member 15, against the spring 44 is given by $F_2=M/L$. Since the lengths $l$ and $L$ have therebetween the relationship of $l<L$ and scarcely change even with swinging motion of each linkage member 13 or 14, the relation $F_1>F_2$ is always obtained, whereby when the speed change is performed under the normal resistance against the speed change, the linkage members 13 and 14 swing always prior to the swinging motion of energy conserving plate 372, thereby carrying out the speed change without displacement of energy conserving plate 342. In a case where the resistance against the speed change is larger than the normal resistance, the energy plate 342 swings clockwise in Fig. 21 against the spring 44, so that the spring 44 conserves energy, whereby when the resistance is eliminated, the conserved energy can change the bicycle speed to the desired stage.

Alternatively, in Figs. 20 and 21, the control bore 371 may be formed at the linkage member 14 and the positioning mechanism 30E may be provided between the energy conserving plate 342 and the linkage member 13, or the control wire $W$ may be fixed to the energy conserving plate 342 and the outer sheath $O$ may be supported to the linkage member 13 or 14 at a side of control bore 371, or the control bore 371 may be provided at the movable member 15.

Also, the control arm 31, when in use, may be supported to a pin other than the pins 17, 18, 19 and 20, or the engaging pin 35 may be provided at the control arm 31 and the control bore 37 be provided at the member at the positioning mechanism 30 side.

The retainers 29 and 29A through 29E at the positioning mechanisms 30 and 30A through 30E, which are each held within the recess 34a at the energy conserving plate 34 or in the cylindrical holder 42 through the spring 40 in the aforesaid constructions, are preferable to be movable in a given range with respect to the interior of recess 34a or cylindrical holder 42 and held at both end positions of its movement elastically by the spring 40 respectively.

In derail, in Fig. 23, a gap $l$ is provided between the inner surface of cylindrical holder 42 and the retainer 29 therein, so that the retainer 29 is made movable in a given range and in the moving direction of movable member 15 with respect to the holder 42. A spring 40 biasing the retainer 29 toward the positioning plate 33 and a mountain-shaped pusher 41 which contacts with the retainer 29 and allows it to be positioned either one end in the moving range of pusher 41, are housed within the holder 42. Also, the retainer 29 can elastically be held at both end positions in the moving range, so that the relative movement of holder 42 to the retainer 29 can absorb a play generated between the outer sheath O and the control wire W.

In the above construction, when the control wire W is pulled to swing the energy conserving member 34 and control arm 31 around the pin 17, the cylindrical holder 42 moves together with the member 34 by the gap I with respect to the retainer 29 in the arrow F as shown by the two-dot-chain line in Fig. 23, in other words, the retainer 29 shifts from the right-hand end to the left-hand end in its moving range as shown in Fig. 23, thereby absorbing the play between the outer sheath O and the control wire W. Then, the retainer 29 in contact at the rear end with the inner surface of holder 42 at the rear side in the moving direction thereof, moves together with the holder 42 and engages with each recess 28 in succession, thereby moving the chain guide 23 step by step in length L corresponding to an interval between the widthwise center lines of adjacent sprockets.

Accordingly, in this case of shifting the retainer 29 from the position shown by the solid line to that by the two-dot-chain line in Fig. 23, the chain guide 23 leads to moving in a distance of the sum of gap I and length L or its integer multiple.

In a case where the pulled control wire W is released to return the chain guide 23 by the return spring 27, the holder 42, as shown by the solid line in Fig. 24, moves in advance of the retainer 29 and brings it in the position shown by the two-dot-chain line in the same drawing as the same as the former case.

Incidentally, the spring 40 and pusher 41 in the aforesaid embodiments are not indispensable. Alternatively, the holder 42, as shown in Fig. 25, may be made flexible at the portions 42b except for contact portions with the retainer 29, the flexible portion 42b elastically biasing the retainer 29, or be biased by an elastic member 400 of C-like shape in section as shown in Fig. 26. Thus, the biasing means is not defined. In addition, the pusher 41 is not defined in shape, but preferable to be mountain-shaped at the contact surface with the retainer 29.

Also, the holder 42 may have an elliptic cavity 42a, or be replaced by a furcate holding member, thus being not defined. The retainer 29 is preferable to use the rolling member, such as a ball, but may be of other shape.

## Claims

1. A gear change device for a cycle comprising a control lever (L) and a derailleur (D) inter-connected in use through a control wire (W), said control lever (L) having a lever body (9) engageable, in use, with one end of the control wire (W) and freely rotatable, a rotary member (4) rotatable under a predetermined rotational resistance and a first drive connection for acting between said control level (L) and rotary member (4) so that said lever body (9) moves in association with said rotary member (4), said derailleur (D) comprising a four member linkage made up of a base member (12), two link members (13, 14), and a movable member (15) mounting a chain guide (23) and having a positioning mechanism (28, 29) formed and arranged to position the chain guide (23) so that, in use, said lever (L) is operated to pull on said control wire (W) to displace the movable member (15) relative to said base member (12) and a return spring (27) moves backward said movable member (15) thereby to change the cycle speed, said derailleur (D) also including a control member (31) which operates independently of first and second members (33, 34) movable relative to each other and mounting said positioning mechanism (28, 29) for action therebetween and has a support means (38) for supporting one of said control wire (W) and an outer sheath (O) guiding said wire (W), and a second drive connection (35, 37) provided between said control member (31) and said second member (34) which second member (34) is movable relative to said control member (31) for displacement of said movable member (15), said second drive connection (35, 37) being formed and arranged to allow said second member (34) to be movable within a given range relative to said control member (31) and said return spring (27) being formed and arranged to act on said movable member (15), via said control member (31) and second member (34), so that the influence of said return spring (12) on said second member (34) is inactivated and said second member (34) is movable, within said range at different positions of the positioning mechanism (28, 29) set by displacement of the control member (31) by the control lever (L) through the control wire (W) in use of the device, characterized in that said first drive connection is a lost motion drive connection (9b, 10) for allowing said lever body (9) to move in association with said rotary member (4) through a predetermined interval of free movement, and in that said second drive connection is a lost motion drive connection (35, 37) to allow said second member (34) to be freely movable relative to the control member (31) so as to allow, in turn, said movable member (15) to be freely displaceable under the influence of the cycle drive chain into a gear sprocket engaging position when said control member (31) is set to a position corresponding to an intermediate position of the positioning mechanism between adjacent gear change positions thereof.

2. A gear change device according to claim 1 wherein said control member is in the form of a control arm (31) which operates independently of said four member linkage mechanism (12—15), said return spring (27) being mounted for acting between said control arm (31) and one member (12) of said four member linkage mechanism (12—15) and said second lost motion drive connection (35, 37) being mounted for acting between said control arm (31) and the second member of said first and second members (31, 33) mounting said positioning mechanism (28, 29).

3. A gear change device according to claim 2, wherein said control arm (31) is pivotally mounted on the base member (12) of said four member linkage mechanism (12—15), said return spring (27) being mounted for acting between said control arm (31) and said base member (12), said positioning mechanism (28, 29) being mounted for acting between said base member (12) and one of said linkage members (13, 14), and said second lost motion drive connection (35, 37) being mounted for acting between said control arm (31) and said one of said linkage members (13, 14) mounting said positioning mechanism (28, 29).

4. A gear change device according to claim 2, wherein said control arm (310) is pivotally mounted on said movable member (15) of said four member linkage mechanism (12—15) said return spring (25) being mounted for acting between said control arm (310) and said movable member (15), said positioning mechanism (28C, 29C) being provided for acting between said movable member (15) and one (13) of said linkage members (13, 14), and said second lost motion drive connection (35, 370) being provided between said control arm and said linkage member (13) constituting said positioning mechanism (28C, 29C).

5. A gear change device according to claim 2, wherein said derailleur (D) is further provided with an energy storage member (34) having an energy storage spring (36), said positioning mechanism (28, 29) being provided for acting between said energy storage member (34) and said base member (12) of said four member linkage mechanism (12—15), and said second lost motion drive connection (35, 37) being mounted for acting between said energy storage member (34) and said control arm (31).

6. A gear change device according to claim 5 wherein said base member (12) is provided with a positioning plate (33B) having a plurality of recesses (28B), said energy storage member (340) having a retainer (29B) selectively engageable with any one of said recesses (28B).

7. A gear change device according to claim 5, wherein said energy storage member (34) is provided with a positioning plate (33A) having a plurality of recesses (28A), said base member (12) having a retainer (29A) selectively engageable with any one of said recesses (28A).

8. A gear change device according to claim 2, wherein said derailleur (D) is provided with an energy storage member (34) having an energy storage plate (341) and with a holding member (43), said energy storage plate (341) and holding member (43) being pivotally mounted relative to said movable member (15), said positioning mechanism (28C, 29C) being provided between said movable member (15) and said holding member (43), said lost motion drive connection (35, 370) being mounted for acting between said holding member (43) and said control arm (310) and having a construction for moving said holding member (43) in association with said energy storage plate (341).

9. A gear change device according to claim 1, wherein said derailleur (D) has an energy storage member (342), said positioning mechanism (28E, 29E) being mounted for acting between said energy storage member (342) and one member (14) of said four member linkage mechanism (12—15).

10. A gear change device according to claim 9, wherein said energy storage member (342) is supported on said base member (12), said positioning mechanism (28E, 29E) is mounted for acting between said energy conserving member (342) and one of the link members (14) of said four member linkage mechanism (12—15), said energy conserving member (342) having a support means for supporting one (O) of said control wire (W) and outer sheath (O) the other (13) of the link members (13, 14) having a support means (38) for supporting the other (W) of said control wire (W) and outer sheath (O) said return spring (44) serving also as an energy storage spring being interposed between said energy storage member (342) and said link member (13) mounting said support means (38), said second lost motion drive connection (19, 371) being mounted for acting between said movable member (15) and said link member (13) having said support means (38).

11. A gear change device according to any one of claims 1 to 10, wherein said positioning mechanism (28, 29) comprises a plurality of recesses (28) and a retainer (29) engageable with one of said recesses, said retainer being provided with a resiliently deformable member (40) biasing said retainer (29) towards said recesses (28), and made movable in a given range with respect to a holding position for holding said retainer (29), and also constructed to be held resiliently in position at both end portions in the moving direction of said retainer (29).

12. A gear change device according to claim 11, wherein said retainer (29) is provided with a pusher (41) which engages said resiliently deformable member (40) and pushes out said retainer (29).

**Patentansprüche**

1. Gangschaltung für ein Fahrrad, mit einem Schalthebel (L) und einer Kettenschaltung (D), die zum Betrieb durch einen Schaltdraht (W) untereinander verbunden sind, wobei der Schalthebel (L) einen Hebelarm (9) aufweist, der im Betrieb mit einem Ende des Schaltdrahtes (W) in Eingriff bringbar und frei schwenkbar ist, mit einem Drehteil (4), das unter einem gewählten Drehwiderstand schwenkbar ist, und mit einer ersten Antriebsverbindung, welche zwischen dem Schalthebel (L) und dem Drehteil (4) wirkt, so daß sich der Hebelarm (9) in Verbindung mit dem Drehteil (4) bewegt, wobei die Kettenschaltung (D) einen Verbund von vier Bauteilen aufweist, der aus einem Grundteil (12), zwei Verbindungsteilen (13, 14) und einem eine Kettenführung (23) tragenden beweglichen Teil (15) aufgebaut ist und einen Einstellmechanismus (28, 29) aufweist, der zur Einstellung der Kettenführung (23) ausgebildet und angeordnet ist, so daß im Betrieb der Schalthebel (L) zum Ziehen des Schaltdrahtes (W) betätigt wird, um das bewegliche Teil (15) relativ zu dem Grundteil (12) zu verschieben, und eine Rückstellfeder (27) das bewegliche Teil (15) zurückbewegt, um dadurch die Fahrradgeschwindigkeit zu verändern, wobei die Kettenschaltung (D) weiterhin ein Steuerteil (31) aufweist, das unabhängig von einem ersten und einem zweiten Bauteil (33, 34) arbeitet, die relativ zueinander beweglich sind und den Einstellmechanismus (28, 29) zur Wirkung zwischen ihnen tragen, und eine Halteeinrichtung (38) zum Halten eines (W) der Bauteile Schaltdraht (W) und äußere Ummantelung (O), die den Schaltdraht (W) führt, aufweist, und eine zweite Antriebsverbindung (35, 37), die zwischen dem Steuerteil (31) und dem zweiten Bauteil (34) angeordnet ist, wobei das zweite Bauteil (34) zur Verschiebung des beweglichen Teils (15) relativ zu dem Steuerteil (31) beweglich ist, und wobei die zweite Antriebsverbindung (35, 37) ausgebildet und angeordnet ist, um dem zweiten Bauteil (34) zu ermöglichen, innerhalb eines gegebenen Bereiches relativ zu dem Steuerteil (31) beweglich zu sein, und wobei die Rückstellfeder (27) ausgebildet und angeordnet ist, um über das Steuerteil (31) und das zweite Bauteil (34) auf das bewegliche Teil (15) zu wirken, so daß der Einfluß der Rückstellfeder (27) auf das zweite Bauteil (34) unwirksam gemacht wird und das zweite Bauteil (34) innerhalb des Bereichs auf verschiedene Stellungen des Einstellmechanismus (28, 29) bewegbar ist, die im Betrieb der Vorrichtung durch Verschiebung des Steuerteils (31) mittels des Schalthebels (L) über den Schaltdraht (W) einstellbar sind, dadurch gekennzeichnet, daß die erste Antriebsverbindung eine Antriebsverbindung (96, 10) mit Totgang ist, um dem Hebelarm (9) zu ermöglichen, sich in Verbindung mit dem Drehteil (4) über ein vorbestimmtes Intervall freier Bewegung zu bewegen, und daß die zweite Antriebsverbindung eine Antriebsverbindung (35, 37) mit Toitgang ist, um dem zweiten Bauteil (34) zu ermöglichen, relativ zu dem Steuerteil (31) frei beweglich zu sein, um seinerseits dem beweglichen Teil (15) zu ermöglichen, unter dem Einfluß der Fahrradkette frei in eine Eingriffstellung mit einem Zahnkranz verschiebbar zu sein, wenn das Steuerteil in eine Stellung gebracht wird, die einer Zwischenstellung des Einstellmechanismus zwischen benachbarten Gangwechselstellungen desselben entspricht.

2. Gangschaltung nach Anspruch 1, wobei das Steuerteil in Form eines Schaltarms (31) ausgebildet ist, der unabhängig von dem Verbund der vier Bauteile (12—15) arbeitet, wobei die Rückstellfeder (27) angeordnet ist, um zwischen dem Steuerarm (31) und einem Bauteil (12) des Verbundmechanismus der vier Bauteile (12—15) zu wirken, und wobei die zweite Antriebsverbindung (35, 37) mit Totgang angeordnet ist, um zwischen dem Steuerarm (31) und dem zweiten Bauteil des ersten und des zweiten Bauteils (31, 33) zu wirken, die den Einstellmechanismus (28, 29) tragen.

3. Gangschaltung nach Anspruch 2, wobei der Steuerarm (31) schwenkbar an dem Grundteil (12) des Verbundmechanismus der vier Bauteile (12—15) angeordnet ist, wobei die Rückstellfeder (27) angeordnet ist, um zwischen dem Steuerarm (31) und dem Grundteil (12) zu wirken, wobei der Einstellmechanismus (28, 29) angeordnet ist, um zwischen dem Grundteil (12) und einem der Verbindungsteile (13, 14) zu wirken, und wobei die zweite Antriebsverbindung (35, 37) mit Totgang angeordnet ist, um zwischen dem Steuerarm (31) und dem einen der Verbindungsteile (13, 14) zu wirken, die den Einstellmechanismus (28, 29) tragen.

4. Gangschaltung nach Anspruch 2, wobei der Steuerarm (310) schwenkbar an dem beweglichen Teil (15) des Verbundmechanismus der vier Bauteile (12—15) angeordnet ist, wobei die Rückstellfeder (25) angeordnet ist, um zwischen dem Steuerarm (310) und dem beweglichen Teil (15) zu wirken, wobei die Einstelleinrichtung (28C, 29C) vorgesehen ist, um zwischen dem beweglichen Teil (15) und einem (13) der Verbindungsteile (13, 14) zu wirken, und wobei die zweite Antriebsverbindung (35, 370) mit Totgang zwischen dem Steuerarm und dem Verbindungsteil (13) vorgesehen ist, die den Einstellmechanismus (28C, 29C) bilden.

5. Gangschaltung nach Anspruch 2, wobei die Kettenschaltung (D) weiterhin mit einem Energiespeicherbauteil (34) versehen ist, das eine Energiespeicherfeder (36) aufweist, wobei der Einstellmechanismus (28, 29) vorgesehen ist, um zwischen dem Energiespeicherbauteil (34) und dem Grundtiel (12) des Verbundmechanismus der vier Bauteile (12—15) zu wirken, und wobei die zweite Antriebsverbindung (35, 37) mit Totgang angeordnet ist, um zwischen dem Energiespeicherbauteil (34) und dem Steuerarm (31) zu wirken.

6. Gangschaltung nach Anspruch 5, wobei das Grundteil (12) mit einer Einstellplatte (33B) versehen ist, die eine Mehrzahl von Vertiefungen (28B) aufweist, und wobei das Energiespeicherbauteil (340) eine Haltevorrichtung (29B) aufweist, die wahlweise mit jeder der Vertiefungen (28B) in Eingriff bringbar ist.

7. Gangschaltung nach Anspruch 5, wobei das Energiespeicherbauteil (34) mit einer Einstellplatte (33A) versehen ist, die eine Mehrzahl von Vertiefungen (28A) aufweist, und wobei das Grundteil (12) eine Haltevorrichtung (29A) aufweist, die wahlweise mit jeder der Vertiefungen (28A) in Eingriff bringbar ist.

8. Gangschaltung nach Anspruch 2, wobei die Kettenschaltung (D) mit einem Energiespeicherbauteil (34), das eine Energiespeicherplatte (341) aufweist, und mit einem Halteteil (43) versehen ist, wobei die Energiespeicherplatte (341) und das Halteteil (43) relativ zu dem beweglichen Teil (15) schwenkbar angeordnet sind, wobei der Einstellmechanismus (28C, 29C) zwischen dem beweglichen Teil (15) und dem Halteteil (43) vorgesehen ist, und wobei die Antriebsverbindung (35, 370) mit Totgang angeordnet ist, um zwischen dem Halteteil (43) und dem Steuerarm (310) zu wirken, und einen Aufbau aufweist, um das Halteteil (43) in Verbindung mit der Energiespeicherplatte (341) zu bewegen.

9. Gangschaltung nach Anspruch 1, wobei die Kettenschaltung (D) ein Energiespeicherbauteil (342) aufweist und wobei der Einstellmechanismus (28E, 29E) angeordnet ist, um zwischen dem Energiespeicherbauteil (342) und einem Bauteil (14) des Verbundmechanismus der vier Bauteile (12—15) zu wirken.

10. Gangschaltung nach Anspruch 9, wobei das Energiespeicherbauteil (342) auf dem Grundteil (12) abgestützt ist, wobei der Einstellmechanismus (28E, 29E) angeordnet ist, um zwischen dem Energiespeicherbauteil (342) und einem (14) der Verbindungsteile des Verbundmechanismus der vier Bauteile (12—15) zu wirken, wobei das Energiespeicherbauteil (342) eine Stützeinrichtung zum Tragen des einen (O) der Bauteile Schaltdraht (W) und äußere Ummantelung (O) aufweist, und das andere (13) der Verbindungsteile (13, 14) eine Stützeinrichtung (38) zum Tragen des anderen (W) Bauteile Schaltdraht (W) und äußere Ummantelung (O) aufweist, wobei die Rückstellfeder (44 auch als eine Energiespeicherfeder dient, die zwischen dem Energiespeicherbauteil (342) und dem die Stützeinrichtung (38) tragenden Verbindungsteil (13) angeordnet ist, und wobei die zweite Antriebsverbindung (19, 371) mit Totgang angeordnet ist, um zwischen dem beweglichen Teil (15) und dem die Stützeinrichtung (38) aufweisenden Verbindungsteil (13) zu wirken.

11. Gangschaltung nach einem der Ansprüche 1 bis 10, wobei der Einstellmechanismus (28, 29) eine Mehrzahl von Vertiefungen (28) und eine Haltevorrichtung (29) aufweist, die mit einer der Vertiefungen in Eingriff bringbar ist, und wobei die Haltevorrichtung mit einem elastische verformbaren Teil (40) versehen ist, das die Haltevorrichtung (29) in Richtung auf die Vertiefungen (28) vorspannt und in einem gegebenen Bereich bezüglich einer Haltestellung zum Halten der Haltevorrichtung (29) bewegbar ist, und das weiterhin ausgebildet ist, um federnd in einer Stellung an beiden Endabschnitten in der Bewegungsrichtung der Haltevorrichtung (29) gehalten zu werden.

12. Gangschaltung nach Anspruch 11, wobei die Haltevorrichtung (29) mit einem Druckteil (41) versehen ist, das mit dem elastisch verformbaren Teil (40) in Eingriff ist und die Haltevorrichtung (29) nach außen drückt.

## Revendications

1. Dispositif de changement de vitesse pour une bicyclette comprenant un levier de commande (L) et un dérailleur (D), interconnectés en utilisation par un câble de commande (W), ledit levier de commande (L) comprenant un corps de levier (9) pouvant venir coopérer, en utilisation, avec une extrémité du câble de commande (W) et pouvant tourner librement, un élément rotatif (4) pouvant être tourné à l'encontre d'une résistance prédéterminée à la rotation et une première connexion d'entraînement pour agir entre ledit levier de commande (L) et l'élément rotatif (4) de manière que ledit corps de levier (9) se déplace en association avec ledit élément rotatif (4), ledit dérailleur (D) comprenant une timonerie à quatre éléments constituée par un élément de base (12), deux éléments de liaison (13, 14) et un élément mobile (15) supportant un guide de chaîne (23) et comportant un mécanisme de positionnement (28, 29) constitué et agencé pour positionner le guide de chaîne (23) de manière qu'en utilisation ledit levier (L) soit manoeuvré pour exercer une traction sur ledit câble de commande (W) et déplacer l'élément mobile (15) par rapport audit élément de base (12) et qu'un ressort de rappel (27) fasse reculer ledit élément mobile (15), modifiant ainsi la vitesse de la bicyclette, ledit dérailleur (D) comprenant également un élément de commande (31) qui actionne indépendamment l'un de l'autre les premier et second éléments (33, 34) mobiles et qui supporte ledit mécanisme de positionnement (28, 29) de façon qu'il agisse entre eux, et qui comprend un moyen de support (38) pour supporter l'un parmi ledit câble de commande (W) et une gaine externe (O) guidant ledit câble (W), et une seconde connexion d'entraînement (35, 37) prévue entre ledit élément de commande (31) et ledit second élément (34), ce second élément (34) étant mobile par rapport audit élément de commande (31) pour déplacer ledit élément mobile (15), ladite seconde connexion d'entraînement (35, 37) étant constituée et agencée pour permettre audit second élément (34) d'être mobile à l'intérieur d'une plage donnée par rapport audit élément de commande (31), et ledit ressort de rappel (27) étant constitué et agencé pour agir sur ledit élément mobile (15), par l'intermédiaire dudit élément de commande (31) et du second élément (34), de manière que l'influence dudit ressort de rappel (12) sur ledit second élément (34) soit inactivée et que ledit second élément (34) soit mobile, dans les limites de ladite plage en différentes positions du mécanisme de positionnement (28, 29) fixées par le déplacement de l'élément de commande (31) par le levier de commande (L) et par l'intermédiaire du câble de commande (W) quand on utilise le dispositif, caractérisé en ce que ladite première connexion d'entraînement est une connexion d'entraînement à mouvement perdu (9b, 10) pour permettre audit corps de levier (9) de se déplacer en association avec ledit élément rotatif (4) sur un intervalle de mouvement libre prédéterminé, et en ce que ladite seconde connexion d'entraînement est une connexion d'entraînement à mouvement perdu (35, 37) pour permettre audit second élément (34) d'être déplacé librement par rapport à l'élément de commande (31) de manière à permettre, de son côté, audit élément mobile (15) d'être déplacé librement sous l'influence de la chaîne d'entraînement de la bicyclette dans une position d'engagement de pignon lorsque ledit élément de commande (31) est fixé sur une position correspondant à une position du mécanisme de positionnement intermédiaire entre des positions de changement de vitesse adjacentes de ce dernier.

2. Dispositif de changement de vitesse selon la revendication 1, dans lequel ledit élément de commande est sous la forme d'un bras de commande (31) qui fonctionne indépendamment dudit mécanisme de liaison à quatre éléments (12—15), ledit ressort de rappel (27) étant monté de façon à agir entre ledit bras de commande (31) et un élément (12) dudit mécanisme de liaison à quatre éléments (12—15) et ladite seconde connexion d'entraînement à mouvement perdu (35, 37) étant montée de façon à agir entre ledit bras de commande (31) et le second élément desdits premier et second éléments (31, 33) supportant ledit mécanisme de positionnement (28, 29).

3. Dispositif de changement de vitesse selon la revendication 2, dans lequel ledit bras de commande (31) est monté de façon pivotante sur l'élément de base (12) dudit mécanisme de liaison à quatre éléments (12—15), ledit ressort de rappel (27) étant monté de façon à agir entre ledit bras de commande (31) et ledit élément de base (12), ledit mécanisme de positionnement (28, 29) étant monté pour agir entre ledit élément de base (12) et l'un desdits éléments de liaison (13, 14), et ladite seconde connexion d'entraînement à mouvement perdu (35, 37) étant montée pour agir entre ledit bras de commande (31) et ledit un desdits éléments de liaison (13, 14) supportant ledit mécanisme de positionnement (28, 29).

4. Dispositif de changement de vitesse selon la revendication 2, dans lequel ledit bras de commande (310) est monté de façon pivotante sur ledit élément mobile (15) du mécanisme de liaison à quatre éléments (12—15), ledit ressort de rappel (25) étant monté pour agir entre ledit bras de commande (310) et ledit élément moblie (15), ledit mécanisme de positionnement (28C, 29C) étant prévu pour agir entre ledit élément moblie (15) et l'un (13) desdits éléments de liaison (13, 14), et ladite seconde connexion d'entraînement à mouvement perdu (35, 370) étant prévue entre ledit bras de commande et ledit élément de liaison (13) constituant ledit mécanisme de positionnement (28C, 29C).

5. Dispositif de changement de vitesse selon la revendication 2, dans lequel ledit dérailleur (D) est en outre muni d'un élément d'emmagasinage d'énergie (34) comportant un ressort d'emmagasinage d'énergie (36), ledit mécanisme de positionnement (28, 29) étant prévu pour agir entre ledit élément d'emmagasinage d'énergie (34) et ledit élément de base (12) dudit mécanisme de liaison à quatre éléments (12—15), et ladite seconde connexion d'entraînement à mouvement perdu (35, 37) étant montée pour agir entre ledit élément d'emmagasinage d'énergie (34) et ledit bras de commande (31).

6. Dispositif de changement de vitesse selon la revendication 5, dans lequel ledit élément de base (12) est muni d'une plaque de positionnement (33B) comportant une pluralité d'évidements (28B), ledit élément d'emmagasinage d'énergie (340) comprenant un élément de retenue (29B) pouvant s'engager sélectivement dans l'un quelconque desdits évidements (28B).

7. Dispositif de changement de vitesse selon la revendication 5, dans lequel l'élément d'emmagasinage d'énergie (34) est muni d'une plaque de positionnement (33A) comportant une pluralité d'évidements (28A), ledit élément de base (12) comprenant un élément de retenue (29A) pouvant s'engager sélectivement dans l'un quelconque des évidements (28A).

8. Dispositif de changement de vitesse selon la revendication 2, dans lequel ledit dérailleur (D) est muni d'un élément d'emmagasinage d'énergie (34) comportant une plaque d'emmagasinage d'énergie (341), et d'un élément formant logement (43), ladite plaque d'emmagasinage d'énergie (341) et ledit élément formant logement (43) étant montés de façon pivotante par rapport audit élément mobile (15), ledit mécanisme de positionnement (28C, 29C) étant prévu entre ledit élément mobile (15) et ledit élément formant logement (43), ladite connexion d'entraînement à mouvement perdu (35, 370) étant montée pour agir entre ledit élément formant logement (43) et ledit bras de commande (310) et ayant une construction lui permettant de déplacer ledit élément formant logement (43) en association avec ladite plaque d'emmagasinage d'énergie (341).

9. Dispositif de changement de vitesse selon la revendication 1, dans lequel ledit dérailleur (D) comprend un élément d'emmagasinage d'énergie (342), ledit mécanisme de positionnement (28E, 29E) étant monté pour agir entre ledit élément d'emmagasinage d'énergie (342) et un élément (14) dudit mécanisme de liaison à quatre éléments (12—15).

10. Dispositif de changement de vitesse selon la revendication 9, dans lequel ledit élément d'emmagasinage d'énergie (342) est supporté sur ledit élément de base (12), ledit mécanisme de positionnement (28E, 29E) est monté pour agir entre ledit élément de conservation d'énergie (342) et l'un des éléments de liaison (14) dudit mécanisme de liaison à quatre éléments (12—15), ledit élément de conservation d'énergie (342) comprenant un moyen de support pour supporter l'un (O) dudit câble de commande (W) et de la gaine externe (O), l'autre (13) des éléments de liaison (13, 14) comprenant un moyen de support (38) pour supporter l'autre (W) dudit câble de commande (W) et de la gaine externe (O), ledit ressort de rappel (44) servant également de ressort d'emmagasinage d'énergie étant interposé entre ledit élément d'emmagasinage d'énergie (342) et ledit élément de liaison (13) supportant ledit moyen de support (38), ladite seconde connexion d'entraînement à mouvement perdu (19, 371) étant montée pour agir entre ledit élément mobile (15) et ledit élément de liaison (13) comprenant ledit moyen de support (38).

11. Dispositif de changement de vitesse selon l'une quelconque des revendications 1 à 10, dans lequel ledit mécanisme de positionnement (28, 29) comprend une pluralité d'évidements (28) et un élément de retenue (29) pouvant s'engager dans l'un desdits évidements, ledit élément de retenue étant muni d'un élément élastiquement déformable (40) sollicitant ledit élément de retenue (29) en direction desdits évidements (28), et rendu mobile dans une plage donnée par rapport à une position de maintien pour maintenir ledit élément de retenue (29) et constitué également pour être maintenu de façon élastique en position sur les deux portions d'extrémité dans la direction du déplacement dudit élément de retenue (29).

12. Dispositif de changement de vitesse selon la revendication 11, dans lequel ledit élément de retenue (29) est muni d'un poussoir (41) qui est en contact avec ledit élément élastiquement déformable (40) et fait sortir ledit élément de retenue (29) par poussée.

FIG.1

FIG.2

FIG.3

FIG.4

1

## FIG.5

36  34  50  14  13  A  20  19

40

12

12a

27

33a

31a

17  31  32  35  37  33  38

29
28  30  31a  15

## FIG.6

27  31a  50  35  37  13  34  31  38  A

17

12  12a

19

39  33a  W

18  32  33  28  29  14  20

30

## FIG.7

30

31a  17  31  35  13  37  28  29  19

12a  27

12

15

20

0  39

26

W  18  32  14

38

21

22  23  24

25

## FIG.8

29

B  29

C

28

33

FIG.9

FIG.10

FIG.11

FIG.12

FIG.13

3

# FIG.14

# FIG.15

# FIG.16

FIG.17

FIG.18

FIG.19

# FIG.20

# FIG.21

# FIG.22

# FIG.23

# FIG.24

# FIG.25

# FIG.26